# EUROPÄISCHE PATENTSCHRIFT

(11) **EP 1 278 664 B1**
(45) Veröffentlichungstag und Bekanntmachung des Hinweises auf die Patenterteilung: **24.01.2007**
(21) Anmeldenummer: 01915060.6
(22) Anmeldetag: 28.02.2001
(51) Int. Cl.: B60S 1/08

(54) **VERFAHREN UND VORRICHTUNG ZUR STEUERUNG EINES WISCHERMOTORS**
METHOD AND DEVICE FOR CONTROLLING A WIPER MOTOR
PROCÉDÉ ET DISPOSITIF DE COMMANDE D'UN MOTEUR D'ESSUIE-GLACE

(30) Priorität: 26.04.2000 DE 10020330
(43) Veröffentlichungstag der Anmeldung: 29.01.2003
(73) Patentinhaber: ROBERT BOSCH GMBH, 70442 Stuttgart (DE)
(72) Erfinder: HERRMANN, Wolfgang, 85354 Freising (DE)
(86) Internationale Anmeldenummer: PCT/DE2001/000756
(87) Internationale Veröffentlichungsnummer: WO 2001/081134

(56) Entgegenhaltungen:
- EP-A- 0 926 026

## Beschreibung

### Stand der Technik

Die Erfindung betrifft ein Verfahren und eine Vorrichtung zur Steuerung eines Wischermotors nach Gattung der unabhängigen Ansprüche. Es sind schon zahlreiche Verfahren zur Steuerung eines Wischermotors bekannt, bei denen die Ansprechempfindlichkeit eines Regensensors in Abhängigkeit von einem zusätzlichen Helligkeitssensor einstellbar ist.

In der DE-A-41 34 432 (EP-A-0 537 471) wird ein Verfahren zur Anpassung der Ansprechempfindlichkeit eines Regensensors vorgeschlagen, wobei die Ansprechempfindlichkeit durch einen zusätzlichen Helligkeitssensor oder durch ein Einschaltsignal eines Lichtschalters einstellbar ist. Weiterhin ist bekannt, durch die äußere Beschaltung die Verstärkung eines Regensensorsignals in Abhängigkeit von der Umgebungshelligkeit zu beeinflussen.

Bei all diesen Verfahren und Vorrichtungen ist jedoch häufig eine Restbenetzung auf der Scheibe anzutreffen, welche sich - insbesondere bei Dunkelheit - als besonders störend herausstellt.

Aus der EP-A-0926026 ist eine Vorrichtung und ein Verfahren zur Steuerung eines Wischermotors für ein Kraftfahrzeug bekannt, bei dem eine auf der Scheibe verbliebene Restbenetzung durch einen weiteren Wischzyklus nach einer definierten Zeitspanne nach Abschalten des Wischermotors beseitigt wird.

### Vorteile der Erfindung

Das erfindungsgemäße Verfahren mit den kennzeichnenden Merkmalen des Hauptanspruchs hat den Vorteil, daß eine Restbenetzung, welche sich nach Abschalten des Wischermotors noch auf der Scheibe befinden kann, erkannt und entfernt wird.

Bei aufhörendem Regen verbleiben häufig noch Schlieren auf der Windschutzscheibe, welche nicht von selbst abtrocknen können und somit eine Restbenetzung darstellen können.
Dadurch, daß nach einer definierten Zeitspanne nach Beendigung eines Wischbetriebs die Signale des Regensensors erneut ausgewertet werden und auf eine zweite Schwelle hin überprüft,werden, können im Bedarfsfall ein oder mehrere weitere Wischvorgänge ausgelöst werden. Dadurch wird die vorhandene Restbenetzung entfernt, was die Sicht wesentlich verbessert.

Durch die in den Unteransprüchen aufgeführten Maßnahmen ergeben sich vorteilhafte Weiterbildungen und Verbesserungen der im Hauptanspruch angegebenen Merkmale.

Wird dieses Verfahren noch mittels eines Helligkeitssensors um ein Umgebungshelligkeitssignal ergänzt und bei einer definierten Änderung der Umgebungshelligkeit der Wischermotor angesteuert, ergibt sich ein weiterer großer Vorteil. Auf diese Weise wird berücksichtigt, daß bei Dunkelheit eine Restbenetzung auf der Windschutzscheibe noch störender ist als bei normalem Tageslicht.

Insbesondere bei Einfahrten von Tunneln oder Parkhäusern, bei denen die Umgebungshelligkeit schnell von Hell nach Dunkel wechselt, ergibt sich so ein großer Vorteil. Befand sich der Wischermotor vor der Einfahrt beispielsweise in einem Intervallbetrieb, so ist die Windschutzscheibe bei der Einfahrt in den Tunnel im Regelfall benetzt. Nach dem Erkennen der Einfahrt, durch das Erkennen der Änderung der Umgebungshelligkeit, kann ein Wischbetrieb ausgelöst werden und so störende Restbenetzung entfernt werden.

Vorteilhaft ist es weiterhin, wenn der Wischermotor in diesen Fällen nur für einen einmaligen Wischzyklus angesteuert wird. Die Restbenetzung ist im Regelfall zwar sehr störend, jedoch mit wenig Feuchtigkeit verbunden. Somit kann sie mit einem Wischzyklus entfernt werden und es kann eine verschleißintensive Belastung, wie beispielsweise Rattern oder Quietschen des Wischers auf der Windschutzscheibe, verhindert werden.

Darüber hinaus ist es noch besonders vorteilhaft, wenn der Wischermotor erst bei Über - bzw. Unterschreiten einer

Feuchtigkeitsschwelle des Regensensors angesteuert wird, da auch auf diese Weise ein verschleißintensives Trockenreiben des Wischers auf der Windschutzscheibe verhindert werden kann.

Die erfindungsgemäße Vorrichtung hat den Vorteil, daß eine auf der Scheibe verbliebene, sichtbeinträchtigende Restbenetzung, welche durch nicht verdampfte Schlieren oder Tropfen hervorgerufen wird, entfernt werden kann.

Insbesondere ist es als vorteilhaft anzusehen, wenn die Auslösestufe einen die Signale mit einer ersten Schwelle vergleichenden ersten Schwellwertanalysator aufweist, der über ein Verzögerungsglied, welches mit einem Zeitgeber verbunden ist, mit einem, die Signale mit einer zweiten Schwelle vergleichenden zweiten Schwellwertanalysator verbunden ist, der bei Über/Unterschreiten der zweiten Schwelle einen einzelnen Wischzyklus auslöst. Auf diese Weise ist eine einfache und zweckmäßige Vorrichtung zur Beseitigung der Restbenetzung auf einer Scheibe gegeben.

Weist diese Vorrichtung darüber hinaus einen Helligkeitssensor auf, wobei die Auslösestufe bei einer definierten Helligkeitsänderung den Wischermotor ansteuert, wenn in einer vorbestimmten Zeitspanne der Wischermotor bereits angesteuert wurde, so wird auf diese Weise vorteilhaft die Historie des Wischens berücksichtigt. Wurde beispielsweise 2 Minuten vor einer großen Helligkeitsänderung noch im Dauerbetrieb gewischt, so kann mit ziemlicher Sicherheit davon ausgegangen werden, daß noch eine Restbenetzung auf der Scheibe vorhanden ist.

Weiterhin ist es von besonderem Vorteil wenn die Vorrichtung eine Hellanalysenstufe aufweist, welche die Signaländerungen des Helligkeitssensors mit der definierten Helligkeitsänderung vergleicht.

Weisen darüber hinaus der Zeitgeber oder das Verzögerungsglied ein wischzyklusanzeigendes Flag auf, welches sich erst nach Ablauf einer vorbestimmten Zeitspanne zurücksetzt, so kann zu jedem Zeitpunkt festgestellt werden, ob innerhalb einer vorbestimmten historischen Zeitspanne ein Wischzyklus ausgelöst oder beendet wurde.

Von wesentlichem Vorteil ist es, wenn die Auswertestufe derart ausgebildet ist, daß sie genau dann einen einmaligen Wischzyklus auslöst, wenn gleichzeitig das Flag des Zeitgebers oder des Verzögerungsgliedes gesetzt ist und die Schwelle der definierten Helligkeitsänderung über/unterschritten wird. Also genau dann, wenn die Hellanalysenstufe ein positives Ergebnis liefert und der letzte Wischbetrieb vor nicht allzu langer Zeit stattfand, denn in diesem Falle ist davon auszugehen, daß sich Restbenetzung auf der Scheibe befindet.

### Zeichnungen

Ein Ausführungsbeispiel der Erfindung ist in den Zeichnungen dargestellt und in der nachfolgenden Beschreibung näher erläutert. Es zeigen:
Figur 1 das Verfahren nach Anspruch 1 in schematischer Darstellung und
Figur 2 eine erfindungsgemäße Vorrichtung in schematischer Darstellung.

### Beschreibung des Ausführungsbeispiels

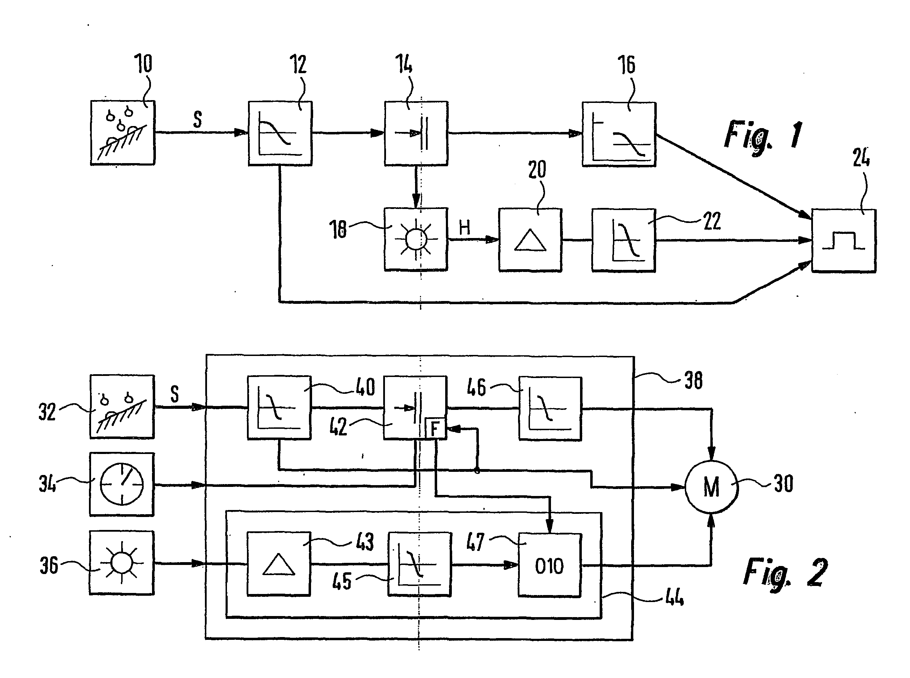

Figur 1 zeigt eine schematische Darstellung des erfindungsgemäßen Verfahrens. Die in einem Sensierschritt 10 vermittelten Signale (S), stellen ein Maß für die Feuchtigkeit dar, welches sich auf der Windschutzscheibe eines Kraftfahrzeuges befindet. Ohne Beschränkung der Allgemeinheit soll in den folgenden Ausführungen angenommen werden, daß das Signal (S) größer ist, je höher die Benetzung der Scheibe, also je höher die Feuchtigkeit ist.

Diese Signale werden in einem ersten Schritt 12 daraufhin überprüft, ob sie eine bestimmte erste Schwelle (S1) überschreiten, also ob ein bestimmtes Feuchtigkeitsniveau erreicht ist. Die erste Schwelle S1 ist eine feste Schwelle, sie kann jedoch auch variabel sein. Dazu sind zahlreiche Verfahren bekannt, insbesondere auch Verfahren, bei denen die Schwelle (S1) in Abhängigkeit des Sensorsignals selbst über einen historischen Mittelwert, gesteuert ist.

Wird diese erste Schwelle (S1) unterschritten, wird der Wischermotor 30 (Figur 2) in einem Auslöseschritt 24 abgeschaltet, da die Feuchtigkeit auf der Scheibe abgenommen hat. Zu diesem Zeitpunkt weist die Windschutzscheibe jedoch häufig noch eine Restbenetzung auf, von der im Regelfall davon ausgegangen wird, daß sie in absehbarer Zeit durch Verdunstung von selbst verschwindet. Dies ist jedoch nicht immer der Fall. Aus diesem Grunde wird in einem zweiten Schritt 14 eine definierte Zeitspanne (T1) abgewartet und in einem dritten Schritt 16 überprüft, ob das Sensorsignal, eine zweite Schwelle (S2) unterschritten hat oder nicht. Diese zweite Schwelle (S2) liegt niedriger als die erste Schwelle (S1), entspricht also einem geringeren Feuchtigkeitsgrad.

Hat das Signal diese zweite Schwelle S2 unterschritten, wird davon ausgegangen, daß die Restbenetzung auf der Scheibe durch Verdunstung oder durch Winddrift verschwunden ist und es wird kein weiterer Wischbetrieb ausgelöst. Ist diese zweite Schwelle nach Ablauf der Zeitspanne t jedoch nicht unterschritten worden, so wird davon ausgegangen, daß eine Restbenetzung auf der Windschutzscheibe vorhanden ist und ein Wischbetrieb zu deren Beseitigung eingeleitet.

In einer Variation kann auch nach Unterschreiten der ersten Schwelle S1 ein Signal der Umgebungshelligkeit einen Wischbetrieb auslösen. Dazu werden in einem Helligkeitserfassungsschritt 18 und in einem Differenzierschritt 20 die Änderungen des Signals der Umgebungshelligkeit erfaßt und in einem Vergleichsschritt 22 bei Überschreiten einer festgelegten, definierten Änderung wiederum ein Wischbetrieb ausgelöst.

Diese Ergänzung ist insbesondere deshalb sinnvoll, da eine vorhandene Restbenetzung auf der Scheibe als besonders störend empfunden wird, wenn beispielsweise in einen Tunnel oder in eine Parkgarage eingefahren wird. Die plötzliche Änderung der Umgebungshelligkeit (H) wird detektiert, und daraufhin ein Wischbetrieb ausgelöst.

Beide Möglichkeiten sind natürlich auch beliebig miteinander kombinierbar, so daß beispielsweise trotz übersteigen der definierten Änderung der Umgebungshelligkeit auch noch eine bestimmte Feuchtigkeitsschwelle (Sf) vorliegen muß bevor ein Wischzyklus ausgelöst wird.

In Figur 2 ist eine erfindungsgemäße Vorrichtung zur Steuerung des Wischermotors 30 gezeigt. Ein Regensensor 32, ein Zeitgeber 34 und ein Helligkeitssensor 36 geben ihr Signal an eine Auslösestufe 38 ab. Diese Auslösestufe 38 steuert den Wischermotor 30.

Die Auslösestufe 38 weist einen ersten Schwellwertanalysator 40 auf, der das Signal (S) des Regensensors 32 empfängt. Dieser erste Schwellwertanalysator 40 ist mit einem Ausgang direkt mit dem Wischermotor 30 und mit einem weiteren Ausgang mit einem Verzögerungsglied 42 verbunden.

Das Verzögerungsglied 42 weist darüber hinaus noch ein Flag F auf welches dann gesetzt wird wenn ein Wischzyklus zu Ende ist. Zurückgesetzt wird es wenn die definierte Zeitspanne T1 vorüber ist und das Flag F zwischenzeitlich nicht neu gesetzt wurde. Je nach Wahl der definierten Zeitspanne T1 muß beachtet werden, daß das Flag F nicht nach einem Wischzyklus gesetzt wird der nur zur Entfernung der Restbenetzung dient.

Das Verzögerungsglied 42 empfängt daher an seinem Eingang das Signal des ersten Schwellwertanalysators 40 sowie das Signal des Zeitgebers 34. Ein Ausgang des Verzögerungsgliedes 42 ist mit einer Hellanalysenstufe 44 verbunden, welche ebenfalls direkt mit dem Wischermotor 30 verbunden ist und diesen ansteuern kann.

Ein weiterer Ausgang des Verzögerungsgliedes 42 ist mit einem zweiten Schwellwertanalysator 46 verbunden, der ebenfalls den Wischermotor 30 ansteuern kann.

Die Hellanalysenstufe 44 umfaßt ein Differenzierglied 43, eine Helligkeitsschwellstufe 45 und eine Logikauswertung 47. Das Signal des Helligkeitssensors 36 wird zum Differenzierglied 43, von dort zur Helligkeitsschwellstufe 45 und daraufhin zur Logikauswertung 47 geleitet, welche in Abhängigkeit des Flags F den Wischermotor 30 ansteuert.

Im Folgenden wird die Funktion der Vorrichtung erläutert. Der Regensensor 32 mißt die sich auf der Scheibe befindende Benetzung. Dieses Signal S des Regensensors 32 wird vom ersten Schwellwertanalysator 12 dahingehend ausgewertet ob eine erste Schwelle (S1) unterschritten wird, also eine gewisse Feuchtigkeitsschwelle unterschritten wird, worauf der erste Schwellwertanalysator 40 den Wischermotor 30 abschaltet. Daraufhin wird das Signal S an das Verzögerungsglied 42 geleitet. Dieses ist mit dem Zeitgeber 34 verbunden. Nach dem Abschalten des Wischermotors durch den ersten Schwellwertanalysator 40 setzt das Verzögerungsglied 42 das Flag F, welches als ein einfacher High-Pegel auf einer Steuerleitung ausgebildet ist. Außerdem setzt das Verzögerungsglied 42 nach einer vorbestimmbaren Zeitspanne T2 das Flag F wieder zurück. Nach Ablauf einer definierten Zeitspanne T1 überprüft der zweite Schwellwertanalysator 46 ob eine zweite Schwelle S2, welche typischerweise niedriger liegt als die erste Schwelle S1, immer noch höher liegt als die zweite Schwelle S2.

Ist dies der Fall wird, zur Beseitigung dieser anscheinend vorhandenen Restbenutzung ein weiterer Wischbetrieb durch den Wischermotor 30 durchgeführt. Sobald das Flag F gesetzt ist, tritt jedoch auch die Hellanalysenstufe 44 in Aktion. Sie empfängt das Signal des Helligkeitssensors 36, differenziert dieses und steuert den Wischermotor 30 genau dann an, wenn eine definierte Änderung der Umgebungshelligkeit festgestellt wird.

Der Algorithmus der Logikauswertung 47 ist dabei beliebig wählbar.

## Patentansprüche

1. Verfahren zur Steuerung eines Wischermotors (30) insbesondere eines Kraftfahrzeugs, wobei ein Regensensor (32) Signale (S) an eine Steuereinrichtung abgibt und bei Unterschreiten einer ersten Schwelle (S1) der Wischermotor (30) abgeschaltet wird, wobei nach einer definierten Zeitspanne (T1) nach Abschalten des Wischermotors (30), der Wischermotor (30) zur Beseitigung einer Restbenetzung eingeschaltet wird, **dadurch gekennzeichnet, dass** der Wischer-motor (30) nach der definierten Zeitspanne (T1) nur eingeschaltet wird, wenn die Signale (S) eine niederere, zweite Schwelle (S2) überschreiten.

2. Verfahren nach Anspruch 1, **dadurch gekennzeichnet, dass** mittels eines Helligkeitssensors (36) die Umgebungshelligkeit festgestellt wird und bei einer definierten Änderung der Umgebungshelligkeit der Wischermotor (30) angesteuert wird, wenn zumindest vor einer vorbestimmbaren Zeitspanne (T2) der Wischermotor (30) bereits angesteuert wurde.

3. Verfahren nach Anspruch 2, **dadurch gekennzeichnet, dass** der Wischermotor (30) erst bei Über-/Unterschreiten einer Feuchtigkeitsschwelle (Sf) eines Regensensors (32) angesteuert wird.

4. Verfahren nach einem der vorhergehenden Ansprüche, **dadurch gekennzeichnet, dass** der Wischermotor (30) für einen einmaligen Wischzyklus angesteuert wird.

5. Vorrichtung zur Steuerung eines Wischermotors (30), insbesondere zur Durchführung eines Verfahrens nach einem der vorhergehenden Ansprüche, mit einem Signale (S) abgebenden Regensensor (32) und einem Zeitgeber (34), wobei eine Auslösestufe (38) vorgesehen ist, welche den Wischermotor (30), der nach Unterschreiten der Signale (S) einer ersten Schwelle (S1) abgeschaltet wurde, nach einer definierten Zeitspanne (T1), zur Beseitigung einer Restbenetzung, einschaltet, **dadurch gekennzeichnet, dass** die Auslösestufe derart ausgebildet ist, dass sie den Wischermotor (30) nach der definierten Zeitspanne (T1), nur einschaltet, wenn die Signale (S) eine niederere, zweite Schwelle (S2) überschreiten.

6. Vorrichtung nach Anspruch 5, **dadurch gekennzeichnet, dass** die Auslösestufe einen die Signale (S) mit einer ersten Schwelle (S1) vergleichenden ersten Schwellwertanalysator (40) aufweist, der über ein Verzögerungsglied (42), welches mit dem Zeitgeber (34) verbunden ist, mit einem, die Signale (S) mit einer zweiten Schwelle (S2) vergleichenden zweiten Schwellwertanalysator (46) verbunden ist, der bei Überschreiten der zweiten Schwelle (S2) einen einzelnen Wischzyklus auslöst.

7. Vorrichtung nach Anspruch 5 oder 6, **dadurch gekennzeichnet, dass** ein Helligkeitssensor (36) vorgesehen ist und die Auslösestufe (38) bei einer definierten Helligkeitsänderung den Wischermotor, insbesondere für nur einen Wischzyklus, ansteuert, wenn zumindest vor einer vorbestimmten Zeitspanne (T2) der Wischermotor (30) bereits angesteuert wurde.

8. Vorrichtung nach Anspruch 7, **dadurch gekennzeichnet, dass** die Auslösestufe (38) eine, die Signaländerungen des Helligkeitssensors (36) mit der definierten Helligkeitsänderung vergleichende Hellanalysenstufe (44) aufweist.

9. Vorrichtung nach einem der Ansprüche 5 bis 8, **dadurch gekennzeichnet, dass** der Zeitgeber (34) oder das Verzögerungsglied (42) ein, einen Wischzyklus anzeigendes Flag (F) aufweisen, welches erst nach Ablauf der vorbestimmten Zeitspanne (T2) zurücksetzt.

10. Vorrichtung nach Anspruch 9, **dadurch gekennzeichnet, dass** die Auswertestufe (38) derart ausgebildet ist, dass sie bei Über-/Unterschreiten der definierten Helligkeitsänderung und bei gesetztem Flag (F) einen einmaligen Wischzyklus zur Beseitigung der Restbenetzung auslöst.

## Claims

1. Method for controlling a wiper motor (30), in particular of a motor vehicle, a rain sensor (32) outputting signals (S) to a control device and the wiper motor (30) being switched off when a first threshold (S1) is undershot, the wiper motor (30) being switched on in order to eliminate residual wetting after a defined time period (T1) after the wiper motor (30) has been switched off, **characterized in that** the wiper motor (30) is switched on after the defined time period (T1) only if the signals (S) exceed a lower, second threshold (S2).

2. Method according to Claim 1, **characterized in that** the ambient brightness is detected by means of a brightness sensor (36) and when there is a defined change in the ambient brightness the wiper motor (30) is actuated if the wiper motor (30) has already been actuated at least before a predeterminable time period (T2).

3. Method according to Claim 2, **characterized in that** the wiper motor (30) is not actuated until a moisture threshold (Sf) of a rain sensor (32) has been exceeded or undershot.

4. Method according to one of the preceding claims, **characterized in that** the wiper motor (30) is actuated for a single wiping cycle.

5. Device for actuating a wiper motor (30), in particular for carrying out a method according to one of the preceding claims, having a rain sensor (32) which outputs signals (S) and a timer (34), a triggering stage (38) being provided which switches on the wiper motor (30), which has been switched off after the signals (S) of a first threshold (S1) have been undershot, after a defined time period (T1) in order to eliminate residual wetting, **characterized in that** the triggering stage is embodied in such a way that it switches on the wiper motor (30) after the defined time period (T1) only if the signals (S) exceed a lower, second threshold (S2).

6. Device according to Claim 5, **characterized in that** the triggering stage has a first threshold value analyser (40) which compares the signals (S) with a first threshold (S1) and which is connected, via a delay element (42) which is connected to the timer (34), to a second threshold value analyser (46) which compares the signals (S) with a second threshold (S2) and triggers an individual wiping cycle when the second threshold (S2) is exceeded.

7. Device according to Claim 5 or 6, **characterized in that** a brightness sensor (36) is provided and the triggering stage (38) actuates the wiper motor, in particular for just one wiping cycle, given a defined change in brightness, if the wiper motor (30) has already been actuated at least before a predetermined time period (T2).

8. Device according to Claim 7, **characterized in that** the triggering stage (38) has a brightness analysis stage (44) which compares the changes in signals of the brightness sensor (36) with the defined change in brightness.

9. Device according to one of Claims 5 to 8, **characterized in that** the timer (34) or the delay element (42) have a flag (F) which indicates a wiping cycle and which does not reset until after the predetermined time period (T2) has expired.

10. Device according to Claim 9, **characterized in that** the evaluation stage (38) is embodied in such a way that it triggers a single wiping cycle to eliminate the residual wetting if the defined change in brightness is exceeded or undershot and if the flag (F) is set.

## Revendications

1. Procédé de commande d'un moteur d'essuie-glace (30), notamment d'un véhicule automobile, selon lequel un capteur de pluie (32) fournit des signaux (S) à une installation de commande et en cas de dépassement d'un premier seuil (S1), le moteur d'essuie-glace (30) est arrêté, selon lequel, après une période prédéfinie (T1) suivant l'arrêt du moteur d'essuie-glace (30), ce dernier (30) est alimenté pour éliminer les traînées,
**caractérisé en ce que**
le moteur d'essuie-glace (30) n'est alimenté après la période (T1) définie que si les signaux (S) dépassent un second seuil (S2) plus petit.

2. Procédé selon la revendication 1,
**caractérisé en ce qu'**
on détermine la luminosité ambiante à l'aide d'un capteur de luminosité (36) et pour une variation définie de la luminosité ambiante on commande le moteur d'essuie-glace (30) si au moins le moteur d'essuie-glace (30) a déjà été commandé avant une période prédéfinie (T2).

3. Procédé selon la revendication 2,
**caractérisé en ce que**
le moteur d'essuie-glace (30) est commandé seulement en cas de dépassement vers le haut/vers le bas d'un seuil d'humidité (Sf) d'un capteur de pluie (32).

4. Procédé selon l'une des revendications précédentes,
**caractérisé en ce que**
le moteur d'essuie-glace (30) est commandé pour un unique cycle d'essuyage.

5. Dispositif de commande d'un moteur d'essuie-glace (30), notamment pour la mise en oeuvre d'un procédé selon l'une des revendications précédentes, comportant un capteur de pluie (32) émettant des signaux (S) et une horloge (34), un étage de déclenchement (38) étant prévu pour alimenter le moteur d'essuie-glace (30) et éliminer les traînées, le moteur ayant été coupé après le dépassement vers le bas d'un premier seuil (S1) par les signaux (S),
**caractérisé en ce que**
l'étage de déclenchement est réalisé pour ne brancher le moteur d'essuie-glace (30) après la période définie (T1) que si les signaux (S) dépassent vers le haut, un second seuil (S2) inférieur.

6. Dispositif selon la revendication 5,
**caractérisé en ce que**
l'étage de déclenchement comporte un premier analyseur de seuil (40) qui compare l'un des signaux (S) à un premier seuil (S1), cet analyseur étant relié à l'horloge (34) par l'intermédiaire d'un élément de temporisation (42), et à un second analyseur de seuil (46) qui compare les signaux (S) à un second seuil (S2) et lors du dépassement vers le haut du second seuil (S2), il déclenche un unique cycle d'essuyage.

7. Dispositif selon la revendication 5 ou 6,
**caractérisé par**
un capteur de luminosité (36), l'étage de déclenchement (38) commandant le moteur d'essuie-glace, notamment pour un unique cycle d'essuyage en cas de variation définie de la luminosité, si au moins le moteur d'essuie-glace (30) a déjà été commandé avant une période prédéfinie (T2).

8. Dispositif selon la revendication 7,
**caractérisé en ce que**
l'étage de déclenchement (38) comporte un étage d'analyse de luminosité (44) qui compare les variations de signal du capteur de luminosité (36) à une variation définie de luminosité.

9. Dispositif selon l'une des revendications 5 à 8,
**caractérisé en ce que**
l'horloge (34) et l'élément de temporisation (42) ont un drapeau (F) indiquant un cycle d'essuyage qui est remis à zéro seulement à la fin d'une période prédéfinie (T2).

10. Dispositif selon la revendication 9,
**caractérisé en ce que**
l'étage d'éjection (38) est réalisé pour qu'en cas de dépassement vers le haut ou vers le bas de la variation de luminosité définie et lorsque le drapeau (F) est mis, il déclenche un unique cycle d'essuyage pour éliminer les traînées.
